# EUROPÄISCHE PATENTSCHRIFT

(11) **EP 0 669 216 B1**
(45) Veröffentlichungstag und Bekanntmachung des Hinweises auf die Patenterteilung: **06.08.1997**
(21) Anmeldenummer: 95890017.7
(22) Anmeldetag: 25.01.1995
(51) Int. Cl.: B60C 11/12, B60C 11/03

(54) **Fahrzeugluftreifen**
Vehicle tyre
Bandage pneumatique pour véhicule

(30) Priorität: 25.02.1994 AT 391/94
(43) Veröffentlichungstag der Anmeldung: 30.08.1995
(73) Patentinhaber: Semperit Reifen Aktiengesellschaft, A-2514 Traiskirchen (AT)
(72) Erfinder: Diensthuber, Franz, Ing., A-2544 Schönau (AT)
(74) Vertreter: Vinazzer, Edith, Dipl.-Ing.

(56) Entgegenhaltungen:
- EP-A- 0 330 644
- DE-U- 8 809 532
- FR-A- 2 640 913
- PATENT ABSTRACTS OF JAPAN vol. 9 no. 191 (M-402) [1914] ,7.August 1985 & JP-A-60 056605 (YOKOHAMA RUBBER CO. LTD.) 2.April 1985,

## Beschreibung

Die vorliegende Erfindung betrifft einen Fahrzeugluftreifen, insbesondere für den Einsatz unter winterlichen Fahrbedingungen, mit einem Laufstreifenprofil, welches als Profilstrukturen mehrere Blockreihen gegebenenfalls in Kombination mit Laufstreifenbändern umfaßt, wobei zumindest in den Schulterbereichen je eine in Umfangsrichtung umlaufende Blockreihe angeordnet ist, und wobei die Profilstrukturen mit einer Vielzahl von Feineinschnitten versehen sind die zumindest im wesentlichen in Profilquerrichtung verlaufen.

Fahrzeugluftreifen mit derartigen Laufstreifenprofilen sind in verschiedenen Ausführungsvarianten bekannt und haben sich in den letzten Jahren im Einsatz unter winterlichen Fahrbedingungen gut bewährt. Die detailliertere Ausgestaltung von Laufstreifenprofilen, insbesondere von solchen mit Lamellenfeineinschnitten, sind Gegenstand einer Anzahl von Patenten und Patentanmeldungen. So ist beispielsweise ein Fahrzeugluftreifen der eingangs genannten Art aus der AT-B 390.916 bekannt. Das Laufstreifenprofil des beschriebenen Reifens setzt sich aus mehreren Profilblockreihen in Kombination mit zumindest einem im Laufstreifenmittelbereich vorgesehenen Laufstreifenband zusammen. Diese Profilstrukturen sind jeweils mit einer Vielzahl von Lamellenfeineinschnitten versehen, die im wesentlichen in Profilquerrichtung verlaufen und über den Großteil ihrer jeweiligen Länge als gerade verlaufende Feineinschnitte gestaltet sind. Winterreifen, die gemäß dieser Patentschrift gestaltet sind, sind seit einigen Jahren unter der Bezeichnung "SEMPERIT TOP-GRIP SLG" mit großem Erfolg auf dem Markt und besitzen sehr ausgewogene Winterfahreigenschaften.

Aus der EP-A-0 579 436 ist ein insbesondere für den Wintereinsatz geeigneter Fahrzeugreifen bekannt, dessen Laufstreifenprofil treppen- oder sägezahnartig verlaufende Feineinschnitte besitzt. Die EP-A-0 608 064 offenbart einen Winterreifen, dessen Laufstreifenprofil mit wellenförmig verlaufenden Feineinschnitten versehen ist.

Die Erfindung hat sich nun die Aufgabe gestellt, einen Reifen der eingangs genannten Art hinsichtlich einer Optimierung der Übertragung von Antriebskräften auf vereistem oder verschneitem Untergrund und des Fahrverhaltens sowohl auf trockenem als auch auf nassem Untergrund, weiter zu verbessern.

Gelöst wird die gestellte Aufgabe erfindungsgemäß dadurch, daß das Laufstreifenprofil asymmentrisch gestaltet ist und auf das Fahrzeug bezogen einen Laufstreifeninnen- und einen Laufstreifenaußenabschnitt umfaßt, wobei in der Schulterblockreihe im Laufstreifeninnenabschnitt Feineinschnitte angeordnet sind, die, in Draufsicht betrachtet, treppen- oder sägezahnförmig gestaltet sind und sich jeweils aus abwechselnd aufeinanderfolgenden langen, zumindest im wesentlichen in Profilquerrichtung verlaufenden und kurzen Einschnittabschnitten zusammensetzen und in der Schulterblockreihe im Laufstreifenaußenabschnitt wellen- oder zick- zackförmige Feineinschnitte angeordnet sind, die sich aus einer Aneinanderreihung mehrerer Wellen- oder Zick-Zack-Strukturen zusammensetzen, die, jeweils für sich gesehen, zumindest im wesentlichen symmetrisch sind.

Es wurde überraschenderweise festgestellt, daß die erfindungsgemäße Kombination von Feineinschnitten in der Innenschulterblockreihe, die sich unter Schaffung von Griffkanten gut öffnen können, mit Feineinschnitten in der Außenschulterblockreihe, die einen entsprechenden Abstützungseffekt bewirken, besondere Vorteile bringt. Im Rahmen der Erfindung wurde festgestellt und durch Versuche mit Reifen bestätigt, daß es für ein gutes Fahrverhalten bzw. Handling von besonderer Bedeutung ist, wenn im Außenschulterbereich eines Reifens die Profilsteifigkeit unter Querkraftbeanspruchung hoch ist, während es für die Übertragung von Traktionskräften vorrangig von Bedeutung ist, im Laufstreifeninnenbereich möglichst viele Griffkanten zur Verfügung zu stellen.Dadurch, daß in der Innenschulterblockreihe Feineinschnitte, die, in Draufsicht betrachtet, treppen- oder sägezahnförmig gestaltet sind und sich jeweils aus abwechselnd aufeinanderfolgenden langen und kurzen Einschnittabschnitten zusammensetzen, vorgesehen sind, wird der schon erwähnte Effekt, daß sich unter Traktionsbeanspruchung unter Öffnung der Feineinschnitte Griffkanten bilden, besonders gut erzielt. Mit wellen- oder zick-zackförmigen Feineinschnitten in der Außenschulter lassen sich die genannten Abstützungseffekte zur Erzielung der Blocksteifigkeit unter Querkraftbeanspruchung besonders gut erreichen.

In diesem Zusammenhang ist es ferner von Vorteil, wenn die kurzen Einschnittabschnitte der treppen- oder sägezahnförmigen Feineinschnitte zumindest im wesentlichen in Reifenumfangsrichtung verlaufen. Als besonders günstig hat sich dabei herausgestellt, wenn die kurzen Einschnittabschnitte eine Länge besitzen, die zwischen 15 und 40 %, insbesondere etwa 30 %, der Länge der langen Einschnittabschnitte beträgt.

Bei einer bevorzugten Ausführungsform der Erfindung besitzt das Laufstreifenprofil zwischen den beiden Schulterblockreihen drei Mittelblockreihen, von welchen eine entlang der Mittellinie (Äquatorlinie) des Fahrzeugreifens angeordnet ist, wobei diese Blockreihe sowie die zwischen dieser und der Innenschulterblockreihe angeordnete Blockreihe treppen- oder sägezahnförmig gestaltete Feineinschnitte besitzen und die dritte Blockreihe mit wellen- bzw. zick-zack-förmigen Feineinschnitten versehen ist. Auch im Mittelbereich des Laufstreifenprofiles ist es wichtig, eine gute Übertragung von Antriebskräften sicherzustellen. Dies wird dort durch die Anordnung von treppen- bzw. sägezahnförmigen Feineinschnitten begünstigt.

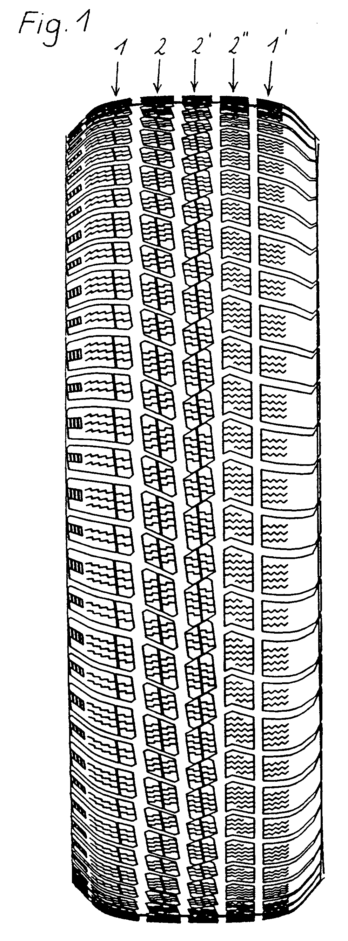

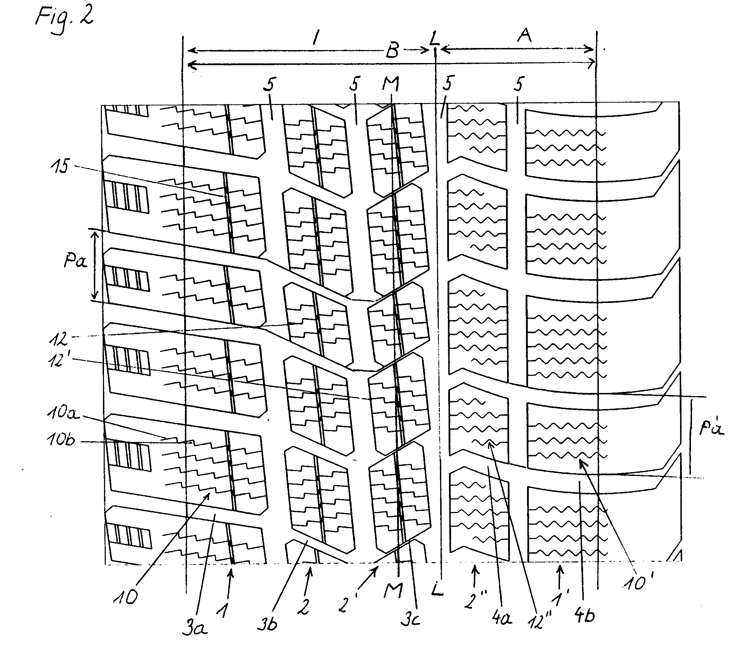

Weitere Merkmale, Vorteile und Einzelheiten der Erfindung werden nun anhand der Zeichnung, die ein Ausführungsbeispiel darstellt, näher beschrieben. Dabei zeigt Fig. 1 eine Frontansicht eines nach der Erfindung gestalteten PKW-Reifens und Fig. 2 eine Draufsicht auf eine Teilabwicklung des Laufstreifenprofiles.

Wie aus den beiden Zeichnungsfiguren hervorgeht, besitzt der Reifen gemäß des dargestellten Ausführungsbeispieles ein bezüglich der Äquatorlinie M-M asymmetrisches Laufstreifenprofil. Das Laufstreifenprofil setzt sich aus fünf Blockreihen, zwei Schulterblockreihen 1, 1' und drei Mittelblockreihen 2, 2', 2'' zusammen, die durch Umfangsnuten 5 voneinander getrennt sind. Dabei sind die Schulterblockreihen 1, 1' zum Teil außerhalb des bodenberührenden Bereiches des Reifens (Laufstreifenbreite B in Fig. 2 = Breite in der Bodenaufstandsfläche gemäß E.T.R.T.O. Standards) angeordnet.

Die Blöcke der Schulterblockreihe 1 und der beiden Mittelblockreihen 2, 2' sind in Umfangsrichtung durch Quernuten 3a, 3b, 3c, die Blöcke der Schulterblockreihe 1' und der Mittelblockreihe 2'' sind durch Quernuten 4a, 4b voneinander getrennt.

Die Blöcke der Blockreihen 1, 2 und 2' einerseits und die Blöcke der Blockreihen 2'' und 1' andererseits bilden jeweils sich in Umfangsrichtung wiederholende gleichartige Pitches. Im vorliegenden Ausführungsbeispiel verläuft die Trennlinie L-L zwischen den einen und den anderen jeweils gleichartigen Pitches innerhalb der die Blockreihe 2' von der Blockreihe 2'' trennenden Umfangsnut 5. Die Trennlinie L-L ist gegenüber der Umfangsmittellinie M-M zur Außenschulter zu um insbesondere 5 bis 15 % der Breite B versetzt. Der Reifen wird derart am Fahrzeug montiert, daß jener Teil des Laufstreifenprofiles, welcher die Blockreihen 1, 2, 2' umfaßt, der Fahrzeuglängsachse zugekehrt ist (wird als Laufstreifeninnenabschnitt I bezeichnet), jener Teil des Laufstreifenprofiles, der die Blockreihen 1', 2'' umfaßt, der Fahrzeugaußenseite zugekehrt ist (wird als Laufstreifenaußenabschnitt A bezeichnet).

Um dominierende Frequenzen im abgestrahlten Reifen/Fahrbahngeräusch zu verhindern und eine Verbreiterung des Frequenzspektrums zu erzielen ist es schon länger üblich, bei Reifenprofilen die Methode der Pitchlängenvariation anzuwenden. Unter dem Begriff Pitch wird dabei ein Profilstrukturelement verstanden, welches sich in der Umfangsrichtung des Laufstreifens gleichartig wiederholt, wobei die Länge in Umfangsrichtung des Reifens als Pitchlänge bezeichnet wird. Im allgemeinen und wie es auch nach dem Stand der Technik seit längerem üblich ist, erfolgt bei der Anordnung von Pitches über den Reifenumfang eine Variation der Pitchlängen, insbesondere derart, daß Pitches in mindestens zwei, vorzugsweise in drei bis fünf, unterschiedlichen Längen gewählt werden, deren Aufeinanderfolge bzw. Anordnung über dem Reifenumfang mittels eines geeigneten Rechenprogrammes ermittelt bzw. optimiert wird.

Im vorliegenden Ausführungsbeispiel beträgt die Gesamtanzahl der Pitches über dem Reifenumfang im Laufstreifeninnenabschnitt I 66 und im Laufstreifenaußenabschnitt A 57. Bei einer Gesamtpitchanzahl, die bei PKW-Reifen im allgemeinen zwischen 40 und 80 Pitches beträgt wird bei dem dargestellten Reifen die Gesamtanzahl der Pitches im Laufstreifeninnenabschnitt um 15 bis 30 % größer gewählt als die Gesamtanzahl der Pitches im Laufstreifenaußenabschnitt A. Dabei wird sowohl im Laufstreifeninnenabschnitt I als auch im Laufstreifenaußenabschnitt A jeweils eine Pitchfolge mit mindestens zwei unterschiedlichen Pitchlängen gewählt. Fig. 2 zeigt im Laufstreifeninnenabschnitt I beispielhaft ein Pitch der Länge Pa mit den zugehörigen Pitchgrenzen und im Laufstreifenaußenabschnitt A gleichermaßen ein Pitch der Länge P'a. Die Pitchfolgen im Laufstreifeninnen- und Laufstreifenaußenabschnitt I, A sind nicht Gegenstand der vorliegenden Erfindung und werden beispielsweise nach einer der bekannten Methoden rechnerisch ermittelt und optimiert bzw. aufeinander abgestimmt.

Sämtliche Einzelblöcke der Blockreihen 1, 2', 2'', 1' sind jeweils mit einer Anzahl von Feineinschnitten 10, 12, 12', 12'', 10' versehen. Dabei wird unter dem Begriff Feineinschnitt eine sehr schmale Nut mit einer Breite zwischen 0,3 und 0,8 mm, insbesondere etwa 0,5 mm, verstanden. Es ist üblich und gehört zum Stand der Technik, daß Reifen, die vor allem für den Einsatz unter winterlichen Fahrbedingungen geeignet sein sollen, mit einer Vielzahl von Feineinschnitten versehen werden, um gute Griffeigenschaften auf schneeigem oder eisigem Untergrund zu gewährleisten und um eine ausreichende Traktion und ein ausreichendes Bremsvermögen auf solchem Untergrund sicherzustellen.

Dabei wurde im Rahmen der vorliegenden Erfindung festgestellt, daß es günstig ist, wenn zumindest in den beiden Schulterblockreihen 1, 1' unterschiedliche Typen von Feineinschnitten 10, 10' ausgebildet sind. So weisen die Feineinschnitte 10 in den Einzelblöcken der Schulterblockreihe 1, die im Laufstreifeninnenabschnitt I verläuft, eine Treppen- oder Sägezahnform auf, das heißt, jeder Feineinschnitt 10 setzt sich aus abwechselnd aufeinanderfolgenden langen und kurzen Einschnittabschnitten 10a, 10b zusammen, die insgesamt die treppen- oder sägezahnförmige Ausbildung ergeben. Dabei sind die längeren Einschnittabschnitte 10a jene, die zumindest im wesentlichen in Profilquerrichtung (Axialrichtung) verlaufen, die kurzen Einschnittabschnitte 10b verlaufen in Umfangsrichtung bzw. im wesentlichen in Umfangsrichtung. Die kurzen Einschnittabschnitte 10b besitzen eine Länge, die zwischen 15 und 40%, insbesondere etwa 30%, der Lange der langen Einschnittabschnitte 10a beträgt. Pro Block sind dabei mindestens zwei Feineinschnitte 10 vorgesehen, die günstigerweise in die benachbarte Umfangsnut 5 einmünden und insgesamt im wesentlichen in Reifenquerrichtung, gleichermaßen wie die Orientierung der Einzelblöcke, verlaufen. Die Sägezahn- oder Treppenform hat insbesondere den Vorteil, daß sich diese Feineinschnitte 10 unter Traktionsbeanspruchung sehr gut öffnen können und somit Griffkanten zur Verfügung stehen. Dabei hat sich überraschenderweise herausgestellt, daß das Erzielen dieses Effektes vorrangig an dem dem Fahrzeug zugekehrten Profilbereich des Reifens wesentlich ist.

Hingegen sind die Feineinschnitte 10', die in der Schulterblockreihe 1', die im Laufstreifenaußenabschnitt A verlaufen, wellen- bzw. zick-zackförmig gestaltet. Die Feineinschnitte 10' bestehen somit aus einer Abfolge von jeweils für sich gesehen zumindest im wesentlichen symmetrischen Wellen- bzw. Zick-Zack-Strukturen. Durch die Zick-Zack- bzw. Wellenform wird ein Abstüftzungseffekt erzielt, so daß insbesondere unter Querkraftbeansprchung eine hohe Biegesteifigkeit der Blöcke gewährleistet ist, was insbesondere für das Fahrverhalten bzw. das Handling, vor allem beim Kurvenfahren, wesentlich ist. Dabei hat sich herausgestellt, daß dieser Abstützungseffekt vor allem im Laufstreifenaußenabschnitt A von Bedeutung ist.

Die im Laufstreifenaußenabschnitt A der Schulterblockreihe 1' benachbarte Mittelblockreihe 2'' wird aus diesem Grund bevorzugt ebenfalls mit wellenförmigen Feineinschnitten 12'' versehen. Die Orientierung bzw. Ausrichtung der Feineinschnitte 12'' und 10' erfolgt bevorzugt ebenfalls zumindest im wesentlichen in Reifenquerrichtung und stimmt in diesem Ausführungsbeispiel im großen und ganzen mit der Querorientierung der Einzelblöcke in diesen beiden Blockreihen überein.

In den Mittelblockreihen 2, 2' werden bevorzugt treppen- bzw. sägezahnförmige Feineinschnitte 12, 12' angeordnet, die zum Großteil die Einzelblöcke komplett durchqueren und somit beidseitig in je eine der Umfangsnuten 5 münden.

Aus Geräuschgründen ist es ferner von Vorteil, wenn Feineinschnitte durch gesonderte schmale Nuten entlüftet werden. Solche Entlüftungsnuten 15 sind beim dargestellten Ausführungsbeispiel in den Blockreihen 1, 2, 2' vorgesehen. Die Entlüftungsnuten 15 sind als die Blöcke im wesentlichen in Umfangsrichtung durchquerende Nuten ausgebildet und besitzen eine Tiefe von ca. 2 mm. Selbstverständlich ist es möglich, solche Entlüftungsnuten auch in den beiden weiteren Blockreihen anzuordnen oder pro Block mehr als eine Entlüftungsnut vorzusehen.

Für eine Vergleichmäßigung der Steifigkeit des Gesamtprofiles ist es ferner günstig, wenn der Abstand bzw. die Abstände von in den einzelnen Blöcken benachbarten Feineinschnitten in allen Blöcken möglichst gleich bzw. annähernd gleich gewählt wird.

Es wurde ferner festgestellt, daß sehr ausgewogene und sehr gute Fahrverhaltenseigenschaften und zwar in allen Disziplinen dadurch erzielt werden, wenn in der linken und der rechten Laufstreifenhälfte, bezogen auf die Umfangsmittellinie M-M, gleiche bzw. nahezu gleiche Fahrflächenanteile vorliegen. Dieser Fahrflächenanteil (Anteil an der Gesamtfläche des Profiles, der mit dem Untergrund in Berührung kommt) wird dabei günstigerweise in einem Bereich zwischen 60 und 68 %, insbesondere um 65 %, gewählt. Der Unterschied im Fahrflächenanteil in der linken und der rechten Laufstreifenhälfte sollte 2 % nicht überschreiten.

Die Blöcke in den Mittelblockreihen 2, 2' sind ferner im wesentlichen parallelogrammförmig gestaltet und derart angeordnet, daß die einen Blockkanten gegenüber der Umfangsmittellinie M-M geringfügig, vorzugsweise unter einem Winkel zwischen 5 und 10°, schräggestellt sind und die beiden weiteren Kanten unter einem Winkel zwischen 60 und 80° relativ zur Umfangsmittellinie M-M verlaufen. Die Richtung der Schrägstellung ist dabei, insbesondere für ein Laufstreifenprofil, welches nicht laufrichtungsgebunden ist, wie es hier der Fall ist, unerheblich. Diese geschilderte besondere Stellung der Blöcke in diesen Mittelblockreihen 2, 2' wirkt sich günstig auf die Traktion auf schneeigem Untergrund aus. Ein weiterer Vorteil dieser Schrägstellung besteht darin, daß insbesondere in diesen Blockreihen unter Einhaltung des geschilderten gleichmäßigen Feineinschnittabstandes und durch eine Orientierung der Feineinschnitte 12, 12' in Gegenwinkelung zu den Blockkanten, die die Quernuten 3b, 3c begrenzen, eine größere Anzahl von Feineinschnitten untergebracht werden kann, als in den beiden Schulterblockreihen. Dabei ist beispielsweise die Gesamtanzahl der Feineinschnitte 12, 12' in den Mittelblockreihen 2, 2' um mindestens 20 %, insbesondere um bis zu 50 % größer als die Gesamtanzahl der Feineinschnitte in der Schulterblockreihe 1' im Laufstreifenabschnitt A. Diese Maßnahme verbessert die Griffeigenschaften des Reifens unter winterlichen Fahrbedingungen, insbesondere beim Anfahren und Beschleunigen.

Die Erfindung ist auf das dargestellte Ausführungsbeispiel nicht eingeschränkt. So ist es insbesondere möglich, das Profil derart zu gestalten, daß es sich aus Pitches zusammensetzt, die über die Gesamtbreite des Profiles verlaufen. Anstelle von Blockreihen, vor allem im Laufstreifenmittelbereich können ferner Laufttreifenbänder angeordnet werden, die beispielsweise mit sackförmig endenden Nuten versehen sein können oder als zumindest im wesentlichen durchgehende Laufstreifenbänder mit entsprechender Anzahl und Ausbildung von Feineinschnitten versehen sind.

## Patentansprüche

1. Fahrzeugluftreifen, insbesondere für den Einsatz unter winterlichen Fahrbedingungen, mit einem Laufstreifenprofil, welches als Profilstrukturen mehrere Blockreihen (1,1';2,2',2'') gegebenenfalls in Kombination mit Laufstreifenbändern umfaßt, wobei zumindest in den Schulterbereichen je eine in Umfangsrichtung umlaufende Blockreihe (1,1') angeordnet ist, und wobei die Profilstrukturen mit einer Vielzahl von Feineinschnitten (10,10'; 12,12',12'') versehen sind, die zumindest im wesentlichen in Profilquerrichtung verlaufen, dadurch gekennzeichnet, daß das Laufstreifenprofil asymmetrisch gestaltet ist und auf das Fahrzeug bezogen einen Laufstreifeninnen- und einen Laufstreifenaußenabschnitt (I, A) umfaßt, wobei in der Schulterblockreihe (1) im Laufstreifeninnenabschnitt (I) Feineinschnitte (10) angeordnet sind, die, in Draufsicht betrachtet, treppen- oder sägezahnförmig gestaltet sind und sich jeweils aus abwechselnd aufeinanderfolgenden langen, zumindest im wesentlichen in Profilquerrichtung verlaufenden und kurzen Einschnittabschnitten (10a, 10b) zusammensetzen und in der Schulterblockreihe (1') im Laufstreifenaußenabschnitt (A) wellen- oder zick-zackförmige Feineinschnitte (10') angeordnet sind, die sich aus einer Aneinanderreihung mehrerer Wellen- oder Zick-Zack-Strukturen zusammensetzen, die, jeweils für sich gesehen, zumindest im wesentlichen symmetrisch sind.

2. Fahrzeugluftreifen nach Anspruch 1, dadurch gekennzeichnet, daß die kurzen Einschnittabschnitte (10b)der treppen- oder sägezahnförmigen Feineinschnitte (10) zumindest im wesentlichen in Reifenumfangsrichtung verlaufen.

3. Fahrzeugreifen nach Anspruch 2, dadurch gekennzeichnet, daß die Länge der kurzen Einschnittabschnitte (10B) zwischen 15 und 40%, insbesondere etwa 30%, der Länge der langen Einschnittabschnitte (10a) beträgt.

4. Fahrzeugluftreifen nach einem der Ansprüche 1 bis 3, dadurch gekennzeichnet, daß zwischen den beiden Schulterblockreihen (1,1') drei Mittelblockreihen (2,2', 2'') verlaufen, von welchen eine entlang der Mittellinie (Äquatorlinie) des Fahrzeugreifens angeordnet ist, wobei diese Blockreihe (2') sowie die zwischen dieser und der Innenschulterblockreihe (1) angeordnete Blockreihe (2) treppen- oder sägezahnförmig gestaltete Feineinschnitte (12, 12') besitzen und die dritte Blockreihe (2'') mit wellen- bzw. zick-zack-förmigen Feineinschnitten (12'') versehen ist.

## Claims

1. Pneumatic vehicle tyre, more especially for use in wintry travel conditions, having a tread strip profile which includes, as profile structures, a plurality of rows of blocks (1,1';2,2',2''), possibly in combination with tread strip bands, one row of blocks (1,1') extending in the circumferential direction and being disposed at least in each of the shoulder regions, and the profile structures being provided with a plurality of fine incisions (10,10';12,12',12'') which extend at least substantially in the transverse direction of the profile, characterised in that the tread strip profile has an asymmetrical configuration and, relative to the vehicle, includes an internal tread strip portion (I) and an external tread strip portion (A), fine incisions (10) being disposed in the row of shoulder blocks (1) in the internal tread strip portion (I) and having a step-like or sawtooth-like configuration when viewed from above, and each fine incision comprises alternately successive long incision portions (10a), which extend at least substantially in the transverse direction of the profile, and short incision portions (10b), and undulatory or zigzag-shaped fine incisions (10') are disposed in the row of shoulder blocks (1') in the external tread strip portion (A) and comprise a series arrangement of a plurality of undulatory or zigzag-shaped structures which, when viewed on their own, are at least substantially symmetrical.

2. Pneumatic vehicle tyre according to claim 1, characterised in that the short incision portions (10b) of the step-like or zigzag-shaped fine incisions (10) extend at least substantially in the circumferential direction of the tyre.

3. Pneumatic vehicle tyre according to claim 2, characterised in that the length of the short incision portions (10b) is between 15 % and 40 %, more especially about 30 %, of the length of the long incision portions (10a).

4. Pneumatic vehicle tyre according to one of claims 1 to 3, characterised in that three rows of central blocks (2,2',2'') extend between the two rows of shoulder blocks (1,1'), one row of central blocks being disposed along the middle line (centre line) of the vehicle tyre, this row of blocks (2') and the row of blocks (2) disposed between said row and the inner row of shoulder blocks (1) having fine incisions (12,12'), which have a step-like or sawtooth-like configuration, and the third row of blocks (2'') being provided with undulatory or zigzag-shaped fine incisions (12'').

## Revendications

1. Bandage pneumatique pour véhicule, notamment destiné à l'utilisation dans des conditions de déplacement hivernales, comportant un profil de bande de roulement présentant, en tant que structures profilées, plusieurs rangées de blocs (1, 1' ; 2, 2', 2'') éventuellement en combinaison avec des rubans de bande de roulement, au moins les zones des épaulements comportant, à chaque fois, une rangée de blocs (1, 1') s'étendant circonférentiellement dans le sens périphérique, et les structures profilées étant munies d'un grand nombre de minces entailles (10, 10' ; 12, 12', 12'') qui s'étendent au moins pour l'essentiel dans la direction transversale du profil, caractérisé par le fait que le profil de la bande de roulement est de configuration asymétrique et comprend, par rapport au véhicule, des régions intérieure et extérieure (I, A) de bande de roulement, la rangée de blocs d'épaulement (1) présentant, dans la région intérieure (I) de bande de roulement, de minces entailles (10) qui sont de configuration en gradins ou en dents de scie observées en plan, et qui se composent à chaque fois de segments d'entailles (10a, 10b) longs et courts, s'étendant au moins pour l'essentiel dans la direction transversale du profil et se succédant en alternance ; et la rangée de blocs d'épaulement (1') présentant, dans la région extérieure (A) de bande de roulement, de minces entailles (10') de configuration ondulée ou en zigzag se composant d'un alignement de plusieurs structures ondulées ou en zigzag qui, considérées chacune individuellement, sont au moins pour l'essentiel symétriques.

2. Bandage pneumatique pour véhicule, selon la revendication 1, caractérisé par le fait que les courts segments d'entailles (10b) des minces entailles (10) de configuration en gradins ou en dents de scie s'étendent, au moins pour l'essentiel, dans la direction du pourtour du pneumatique.

3. Bandage pneumatique pour véhicule, selon la revendication 2, caractérisé par le fait que la longueur des courts segments d'entailles (10B) est comprise entre 15 et 40 %, et représente notamment environ 30 % de la longueur des segments d'entailles longs (10a).

4. Bandage pneumatique pour véhicule, selon l'une des revendications 1 à 3, caractérisé par le fait que, entre les deux rangées de blocs d'épaulement (1, 1'), s'étendent trois rangées de blocs centrales (2, 2', 2'') dont l'une est disposée le long de la ligne médiane (ligne équatoriale) du pneumatique de véhicule, cette rangée de blocs (2'), ainsi que la rangée de blocs (2) interposée entre cette dernière et la rangée de blocs d'épaulement intérieur (1), possédant de minces entailles (12, 12') de configuration en gradins ou en dents de scie, et la troisième rangée de blocs (2'') étant pourvue de minces entailles (12'') de configuration respectivement ondulée ou en zigzag.
